# EUROPÄISCHE PATENTSCHRIFT

(11) **EP 2 445 702 B1**
(45) Veröffentlichungstag und Bekanntmachung des Hinweises auf die Patenterteilung: **01.02.2017**
(21) Anmeldenummer: 10742398.0
(22) Anmeldetag: 18.06.2010
(51) Int. Cl.: B29C 67/00, B22F 3/105, B65G 53/40

(54) **VERFAHREN UND VORRICHTUNG ZUM SCHALTEN EINES PARTIKELMATERIALSTROMES BEIM SCHICHTWEISEN BAUEN VON MODELLEN**
METHOD AND DEVICE FOR SWITCHING A PARTICULATE MATERIAL FLOW IN THE CONSTRUCTION OF MODELS IN LAYERS
PROCÉDÉ ET DISPOSITIF DE COMMUTATION D'UN COURANT DE MATIÈRE PARTICULAIRE LORS DE LA CONSTRUCTION COUCHE PAR COUCHE DE MAQUETTES

(30) Priorität: 22.06.2009 DE 102009030113
(43) Veröffentlichungstag der Anmeldung: 02.05.2012
(73) Patentinhaber: voxeljet AG, 86316 Friedberg (DE)
(72) Erfinder: HARTMANN, Andreas, Dominik, 86391 Stadtbergen (DE)
(74) Vertreter: Helbig, Christian
(86) Internationale Anmeldenummer: PCT/DE2010/000687
(87) Internationale Veröffentlichungsnummer: WO 2010/149133

(56) Entgegenhaltungen:
- EP-A1- 0 224 621
- EP-A1- 0 318 247
- DE-U1- 20 122 639
- US-A- 3 884 401
- US-A- 5 599 581
- US-B1- 6 405 095
- YANG ET AL: "Metering and dispensing of powder; the quest for new solid freeforming techniques", POWDER TECHNOLOGY, ELSEVIER SEQUOIA, LAUSANNE, CH, vol. 178, no. 1, 16 August 2007 (2007-08-16), pages 56-72, XP022202413, ISSN: 0032-5910, DOI: 10.1016/J.POWTEC.2007.04.004

## Beschreibung

Die Erfindung bezieht sich auf ein Verfahren und eine Vorrichtung zum Schalten eines Partikelmaterialstromes beim schichtweisen Bauen von Modellen, wobei aus einem in Richtung einer Werkstückplattform eine Öffnung aufweisenden Behälter einem nachfolgenden Verfahrensschritt Partikelmaterial zugeführt werden.

Allgemein sind Verfahren zur Herstellung dreidimensionaler Bauteile schon seit längerer Zeit bekannt.

Beispielsweise wird in der europäischen Patentschrift EP 0 431 924 B1 ein Verfahren zur Herstellung dreidimensionaler Objekte aus Computerdaten beschrieben. Dabei wird ein Partikelmaterial in einer dünnen Schicht auf eine Plattform aufgetragen und dieses selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine gewisse, erwünschte Höhe des Objektes erreicht ist. Aus den bedruckten und verfestigten Bereichen entsteht so ein dreidimensionales Objekt.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver z.B. durch Abbürsten befreit werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Bei aus dem Stand der Technik bekannten 3D-Druckverfahren wird üblicherweise das Partikelmaterial mit Hilfe einer Beschichtereinheit aufgetragen. Diese Beschichtereinheit muss bei niedrigem Füllstand mit Partikelmaterial aus einem Vorratsbehälter beschickt werden.

Hierfür sind aus dem Stand der Technik verschiedene Verfahren und Vorrichtungen bekannt.

So beschreibt die WO 98/28124 A1 ein Verfahren, bei dem das Pulvermaterial über einen Kolben auf einen Arbeitsbereich geschoben wird und von dort über Walzen auf den zu beschichtenden Bereich aufgetragen wird.

Ferner ist aus der WO 00/78485 A2 eine Vorrichtung zum Befüllen eines Beschichters bekannt, bei dem in einer Endposition des Beschichters über diesem ein Vorratsbehälter angeordnet ist, der einen Schiebeverschluss aufweist, wobei dieser Schiebeverschluss bei Bedarf geöffnet werden kann und so die Beschichtereinrichtung befüllt werden kann.

Aus derselben Offenlegungsschrift ist weiterhin eine Vorrichtung bekannt, bei der die Förderung des Partikelmaterials aus dem Vorrat zum Beschichter über ein Förderband erfolgt.

Ferner wird in der WO 2003/97518 beschrieben das Partikelmaterial aus dem Vorratsbehälter über einen Schieber in das Beschichtersystem zu fördern. Hierbei fördert ein Schieber immer die gleiche Menge Fluid in einen Beschichter. Da sich ein Recoater beim Betrieb über die Länge ungleichmäßig entleert und immer die gleiche Menge Partikelmaterial dem Beschichter zugeführt wird, ergibt sich unter Umständen in manchen Bereichen ein Pulverüberschuss. Dieses überschüssige Pulvermaterial wird dann gegebenenfallsentleert, um wieder ein einheitliches Niveau von Pulvermaterial im Recoater zu erhalten. Damit ist neben dem komplizierten Betrieb auch der bauliche Aufwand einer solchen Vorrichtung nicht unerheblich.

Darüberhinaus ist aus US 2004/0012112A1 eine Fördereinrichtung bekannt, die ein Bandtransportsystem mit Förderkörben zum Transport von Partikelmaterial zum Beschichter nutzt.

Eine weitere Möglichkeit, um Partikelmaterial aus einem Vorratsbehälter in ein Beschichtersystem zu fördern wird in der DE 10 2005 056 260 A1 beschrieben. Hierbei wird die Beschichtereinheit bei niedrigem Füllstand mit Partikelmaterial aus einem Vorratsbehälter derart befüllt, dass der Füllstand in der Beschichtereinheit über die gesamte Beschichterlänge auch bei vorher unregelmäßigem Füllstand ein vorbestimmtes Niveau erreicht.

Bei diesen aus dem Stand der Technik bekannten Verfahren und Vorrichtungen zum Befüllen einer Beschichtereinheit für Partikelmaterial hat es sich als nachteilig erwiesen, dass die Schaltung des Schüttgüterstroms einen mechanisch aufwändigen Verschluss benötigt, und die Behältnisse sich durch eine mögliche Ausbildung von Pulverbrücken bzw. Schüttkegeln nur schlecht entleeren lassen.

Die Offenbarung von YANG ET AL: "Metering and dispensing of powder; the quest for new solid freeforming techniques" (POWDER TECHNOLOGY, ELSEVIER SEQUOIA, LAUSANNE, CH, Bd. 178, Nr. 1, 16. August 2007 (2007-08-16), Seiten 56-72, DOI: 10.1016/J.POWTEC.2007.04.004*)* beschreibt einen Behälter, wobei Partikel mit Unterdruck und mit Überdruck beaufschlagt werden.

Aus dem Stand der Technik ist es allgemein bekannt das Ausflussverhalten des pulverförmigen Mediums durch mechanische Schwingungsanregung des pulverförmigen Mediums mittels des Behälters zu verbessern. Dies kann beispielsweise mittels mechanischer Aktoren erfolgen, um die Pulverbrücken zu zerstören.

Darüberhinaus kann das pulverförmige Medium auch direkt mechanisch angeregt zum werden. So können mechanisch bewegte Aktoren wie Schieber, Ketten oder Rechen zum Zerstören der Pulverbrücken im Pulvervorrat vorgesehen sein.

Darüberhinaus sind mechanische Verschlüsse vorgesehen, um den Pulverausfluss zu steuern.

Die Nachteile bei der mechanischen Anregung sind unter anderem:
A. Bei Ausflusshemmung können sich unter Anregung weitere Brücken bilden bzw. bestehende Brücken werden weiter verstärkt.
B. Schwingungen können sich ungewollt auf andere Teile eines Systems übertragen und diese negativ beeinflussen
C. Die Auslegung eines Schwingungssystem ist aufwendig
D. Die Wirkung der Schwingungen sind Abhängig vom Füllgrad des Behälters. Da sich der Füllstand während der Entleerung ändert ist die Wirkung schlecht berechenbar.
E. Die Bewegungslager aller mechanischen Teile können durch die pulverförmigen Medien blockiert werden, was zu einem erhöhten Ausfallrisiko führen kann. Eine Abdichtung der Lager ist aufwendig und teuer.
F. Alle mechanischen Teile unterliegen mechanischem Verschleiß und damit einem erhöhten Ausfallrisiko.
G. Mechanisch bewegte Verschlüsse müssen, um Materialverlust zu verhindern, möglichst dicht für Partikelmaterial gestaltet werden. Dazu muss Ihre Lagerung ein enges Spiel aufweisen, was aber auf der anderen Seite auch ein Verklemmen durch eindringendes Partikelmaterial begünstigt.

Ferner ist es aus der WO 2008/055615 A1 und der DE 101 05 504 bekannt, dass zur Fluidisierung von Pulvermaterial Gas in die Pulvermasse eingebracht wird.

Bei einem Rapid Prototyping-Verfahren ist es zudem auch schwierig, dass der Beschichter sehr lange und schmal ist, aber sehr gleichmäßig über seine gesamte Länge befüllt werden muss. Zudem steht hierfür üblicherweise auch nur ein sehr kurzes Zeitfenster zur Verfügung.

Weiterhin ist es auch wichtig, den Pulververlust beim Befüllen des Beschichters oder Recoaters möglichst gering zu halten, da die Entsorgung des Abfallsandes bei einem Sandverfahren kostenintensiv ist.

Es ist daher Aufgabe der vorliegenden Erfindung ein Verfahren und eine Vorrichtung bereitzustellen, mit denen es möglich ist, den Vorratsbehälter leicht zu entleeren.

Diese Aufgabe wird durch ein Verfahren nach Anspruch 8, bei dem das Partikelmaterial im Behälter mit Unterdruck und mit Überdruck beaufschlagt wird. Dadurch kann das pulverförmige Material vorzugsweise lokal verfestigt und gelockert werden und damit dessen Strom geschaltet werden.

Darüberhinaus wird diese Aufgabe gelöst mit einer Vorrichtung nach Anspruch 1 zum Schalten eines Partikelmaterialstromes beim schichtweisen Bauen von Modellen, wobei aus einem Behälter, der in Richtung einer Werkstückplattform eine Öffnung aufweist, um Partikelmaterialien einem nachfolgendem Verfahrensschritt zuzuführen, wobei Mittel zur Beaufschlagung des Partikelmaterials mit Unterdruck und mit Überdruck im Behälter vorgesehen sind.

Gemäß einer bevorzugten Ausführungsform der Erfindung führt die Unterdruckbeaufschlagung zu einer lokalen Verfestigung des Partikelmaterials und damit zu einem Ausflusstopp des Partikelmaterials aus der Öffnung des Behälters. Eine Überdruckbeaufschlagung des Partikelmaterialsführt dagegen zu einer Lockerung und damit zum Ausfließen des Pulvermaterials aus der Öffnung des Behälters.

Die Beaufschlagung mit Über und Unterdruck erfolgt dabei gemäß einer besonders bevorzugten Ausführungsform über poröse Materialien wie beispielsweise Gewebe, deren Maschenweite beziehungsweise Porenweite kleiner ist als eine kleinste Korngröße oder ein kleinster Durchmesser des zu schaltenden Partikelmaterials.

Dies führt zu einer lokalen Verfestigung des pulverförmigen Mediums. Die Verfestigung des pulverförmigen Mediums verhindert damit das Ausfließen des Schüttgutes.

Die porösen Materialien werden vorzugsweise an den Wänden direkt über der Austrittsöffnung angebracht. Verfahrensbedingt sind die Behälter nach unten zur Öffnung verjüngt.

Die Technik des Lufteinblasens wird ebenso bei Auslaufproblemen aus Silos benutzt, um die Prozesssicherheit zu erhöhen. Alle Vorrichtungen des Stand der Technik verwenden aber für das Schalten des Pulverstromes ein explizites Element, wie beispielsweise einen Schieber, ein Quetschventil eine Zellradschleuse oder Ähnliches und nicht den Über- oder Unterdruck.

Mit der Kombination der Techniken, an den Behälterwänden Überdruck und Unterdruck anzulegen kann je nach Pulverfliesseigenschaft ein Schalten realisiert werden. Die Sicherheit des Schaltverhaltes hängt dann von den Pulverfliesseigenschaften oder Brückenbildungseigenschaften des zu schaltenden Partikelmaterials ab.

Mit einem solchen Verfahren wird es ermöglicht nahezu beliebige Auslaufgeometrien für Vorratsbehälter einzusetzen.

Besonders vorteilhaft ist es, wenn das erfindungsgemäße Verfahren eingesetzt wird, um aus dem Behälter pulverförmige Medien einem Beschichter zuzuführen.

Darüberhinaus ist es aber ebenso möglich, dass aus dem Behälter pulverförmige Medien einer Werkstückplattform zugeführt werden.

Neben der Verwendung eines Luftanschlusses und von Kammern kann gemäß einer bevorzugten Ausführungsform der Erfindung die Beaufschlagung mit Unter- oder Überdruck mittels am oder im Behälter angebrachter Düsen erfolgen.

Dabei kann es gemäß einer besonders bevorzugten Ausführungsform vorgesehen sein, dass die Düsen einzeln über unabhängige Ventile ansteuerbar sind und dann entweder gleichzeitig oder nicht gleichzeitig angesteuert werden.

Die Einzelansteuerung der Luft ermöglicht ein sicheres Lösen lokaler Verfestigungen, da sich der gesamte zur Verfügung stehende Gesamtdruck auf die zu lockernde Stelle konzentriert.

Weiter verhindert die Einzelansteuerung der Düsen, dass sich der erhebliche Druckabfall an einer freigeblasenen Düse nicht auf die anderen Düsen auswirken kann.

Mit der Einzelansteuerung wird das Einblasen einer großen Luftmenge in äußerst kurzer Zeit auf einem konzentrierten Volumen ermöglicht. Damit werden die verfestigten Stellen explosionsartig gesprengt. Die Einzelansteuerung der Düsen ist somit auch eine sehr sparsame Variante, da nur dort und dann Luft verbraucht wird, wo es gerade notwendig ist. Diese Eigenschaft zeigt sich auch dann als vorteilhaft, wenn Energiesparmaßnahmen berücksichtigt werden sollen, da Druckluft mit hohem energetischen Aufwand erzeugt werden muss.

Je nach Ausgestaltung kann die gleichzeitige oder nicht gleichzeitige Ansteuerung der Ventile sinnvoll sein. Besteht zum Beispiel keine Gefahr, dass sich eine Düse freiblasen kann, und steht Druckluft in hohem Maße zur Verfügung, ist die gleichzeitige Ansteuerung aller Düsen unter Umständen eine kostengünstigere Lösung.

Werden mehrere Düsen im Behälter angeordnet, kann mit einer bestimmten Ansteuerungsfolge ein Bewegungsschema in das Pulvermaterial eingeleitet werden.

In der bevorzugten Erfindung werden die Düsen zum Beispiel der Reihe nach angeordnet und nacheinander sehr kurz angesteuert. Dadurch wird im pulverförmigen Medium eine sich in der Länge ausbreitende Welle erzeugt, die sich besonders gut auf dessen Ausflussverhalten auswirkt.

Die Düsen können auch nach Erfahrungswerten über das Fließverhalten in bestimmten geometrischen Behältern, gezielt angeordnet und angesteuert werden.

So zeigt sich in schmalen Vorlagebehältern, die der Länge nach selbst über eine Schnecke befüllt werden, dass das Material im vorderen Bereich der Schnecke stärker komprimiert wird. An diesen Stellen können mehrere Düsen angeordnet werden oder eine einzelne Düse öfter angesteuert werden.

Als vorteilhaft hat es sich gezeigt, wenn bei einem Verfahren gemäß der vorliegenden Erfindung zum Erzeugen des Überdrucks Gase in das Fluid eingebracht werden. Das Gas kann dabei gemäß einer besonders bevorzugten Ausführungsform Luft, befeuchtete Luft, erwärmte Luft, Edelgase und/oder reaktive Komponenten aufweisen.

Die erfindungsgemäße Vorrichtung hat sich insbesondere dann als sehr vorteilhaft erwiesen, wenn eine Länge des Behälters ein Vielfaches seiner Breite beträgt.

Dabei kann der Behälter ein Behälter sein, aus dem Fluide einem Beschichter zugeführt werden oder aber auch ein Behälter, aus dem Fluide einer Werkstückplattform zugeführt werden.

Wie schon erwähnt, wird bei einer erfindungsgemäßen Vorrichtung gemäß einer besonders bevorzugten Ausführungsform vorgeschlagen, dass im oder am Behälter Düsen zum Zuführen von Gasen vorgesehen sind.

Hierbei kann es vorteilhaft sein, wenn die Düsen unabhängig voneinander ansteuerbar sind. Das Ansteuern der Düsen kann dabei über Ventile erfolgen.

Vorzugsweise können dabei die Öffnungen des Behälters zusätzlich durch der Öffnung entsprechende Siebanordnungen verschießbar sein. Dabei könnte es beispielsweise sein, dass die Siebe derart ineinander verschoben werden können, dass sie die Öffnung verschließen und öffnen können.

Darüberhinaus kann zusätzlich zum Verschließen der im Behälter vorgesehenen Öffnung ein mechanischer Schieber vorgesehen sein.

Weitere vorteilhafte Ausgestaltungen ergeben sich aus den Unteransprüchen und den nachfolgend beschriebenen Ausführungsbeispielen.

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 eine Beschichterbefüllung gemäß einer ersten bevorzugten Ausführungsform der vorliegenden Erfindung in verschiedenen Ansichten;
Figur 2 eine Beschichterbefüllung gemäß einer weiteren bevorzugten Ausführungsform der Erfindung in verschiedenen Ansichten; und
Figur 3 eine Beschichterbefüllung gemäß einer weiteren Ausführungsform der vorliegenden Erfindung in einer Ansicht von unten.

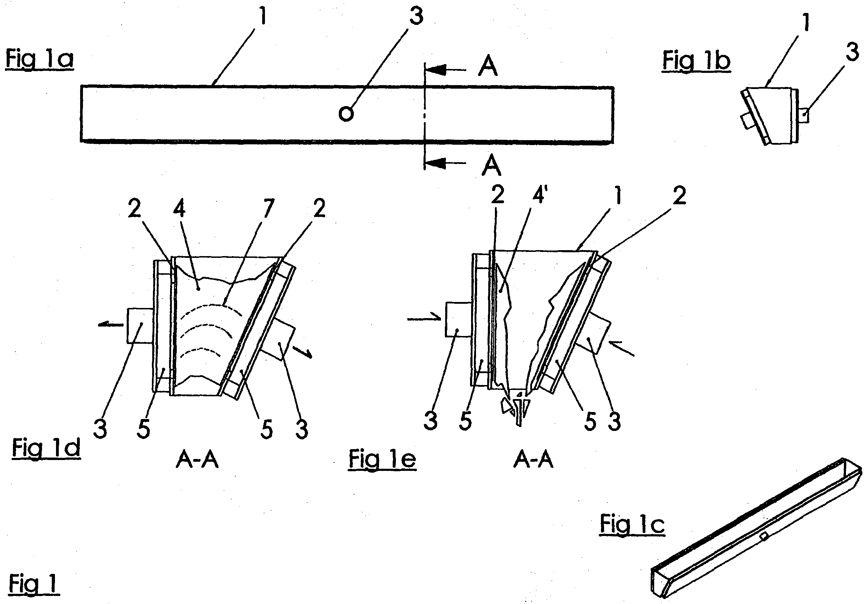

In Figur 1 ist ein Vorrats- und Zuführbehälter 1 für einen Beschichter dargestellt. Figur 1a) zeigt eine Seitenansicht, 1b) eine Frontansicht von 1a), 1c) eine dreidimensionale Darstellung des Behälters 1, 1d) stellt einen Schnitt durch den Zuführbehälter aus 1a) entlang der Linie A-A in einem beladenen geschlossenen Zustand dar. In Figur 1e) ist eine der Figur 1d) entsprechende Darstellung, allerdings in einem geöffneten Zustand.

Der Recoater einer Vorrichtung beispielsweise für das Rapid-Prototyping-Verfahren ist üblicherweise sehr lange und sehr schmal ausgeführt. Die Recoaterbefüllung beziehungsweise der Behälter 1 hat die Aufgabe den Recoater über die Länge verlustfrei und sehr gleichmäßig mit pulverförmigen Medien 4 zu befüllen. Die Recoaterbefüllung 1 ist dabei ebenfalls ein langes, schmales Behältnis, das über dem Recoater angeordnet ist und nach unten offen ist oder zumindest geöffnet werden kann.

Das Ausflussverhalten eines pulverförmigen Materials wird üblicherweise durch folgende Gegebenheiten beeinflusst:
- Geometrie des Behälters. Je länger, schmäler und flacher der Trichterwinkel des Behälters ist, desto größer ist die Gefahr von Brückenbildung im Medium und damit der Hemmung des Schüttgutflußes.
- Oberflächenbeschaffenheit der Behälterinnenwände. Je größer die Oberfläche/rauer der Innwände sind desto größer ist die Gefahr von Brückenbildung im Pulver und damit der Hemmung des Schüttgutflußes.
- Öffnungsweite des Trichterauslaufes. Je kleiner der Austrittquerschnitt für das Medium ist, desto größer ist die Gefahr von Brückenbildung im Pulver und damit der Hemmung des Schüttgutflußes
- Physikalische Eigenschaft des pulverförmigen Mediums. Jedes Pulverförmige Medium hat unterschiedliche Fließeigenschaften und neigt damit auch unterschiedlich zur Ausbildung von Brücken. Ist das Medium dabei noch feucht, verschlechtert dies das Fließverhalten um eine weiteres.

Die Problematik bestehender Lösungen wird gemäß der gezeigten bevorzugten Ausführungsform der vorliegenden Erfindung dadurch behoben, indem das Ausbilden von Brücken bzw. das lokale Verfestigen des pulverförmigen Mediums gezielt als Verschluss genutzt wird.

Gemäß der in der Figur 1 gezeigten Ausführungsform der Erfindung wird durch an den Wänden des Behälters 1 angeordnete feinmaschige Gitter oder Gewebe 2 über einen Luftanschluss 3 Luft mittels in den Behälterwänden angeordneten Druckkammern 5 abgesaugt.

Das pulverförmige Medium 4 kommt so mit einem mit Unterdruck beaufschlagten Sieb oder Gewebe oder ähnlichem porösen Material 2 in Kontakt, durch das Schüttgutpartikel nicht entweichen können, aber ein solcher Sog in das Schüttgut eingebracht werden kann, dass sich Pulverbrücken 7 oder ähnliche Verfestigungen des Pulvermaterials bilden.

Dies führt zu einer Verfestigung des pulverförmigen Mediums 4 und der Ausbildung von Brücken 7. Die Brücken 7 verhindern damit das Ausfließen des Schüttgutes beziehungsweise Fluides 4.

Das Auflösen der gebildeten Brücken 7 erfolgt durch das Einblasen von Luft. Die Reibung zur Wand wird aufgelöst die Brücken 7 werden zerstört. Das Fluid 4 kann abfließen.

Hierfür kann auch ein Überdruck durch einen siebartigen Einlass derart in das Schüttgut 4 eingeleitet wird, dass keine Schüttgutpartikel in die Zuführluft gelangen können und Schüttgutbrücken 7 sicher zerstört werden.

Jedenfalls ist es gegebenenfalls vorteilhaft, wenn ein Überdruck durch Luftdüsen derart in das Schüttgut 4 eingeleitet wird, dass keine Schüttgutpartikel in die Zuführluft gelangen können und die Schüttgutbrücken 7 sicher zerstört werden.

Das Einblasen von Luft kann auch zur Unterstützung eines mechanischen Verschlusses eingesetzt werden. Eine bevorzugte Lösung ist dabei ein Behälter 1, der zusätzlich an der Unterseite einen Schieberverschluss aufweist.

Die oben beschriebenen Brücken 7, 7' können auch mittels kleinerer absaugenden Düsen 6' aufgebaut werden, falls beispielsweise kein Platz für Unterdrucktanks 5 gegeben ist.

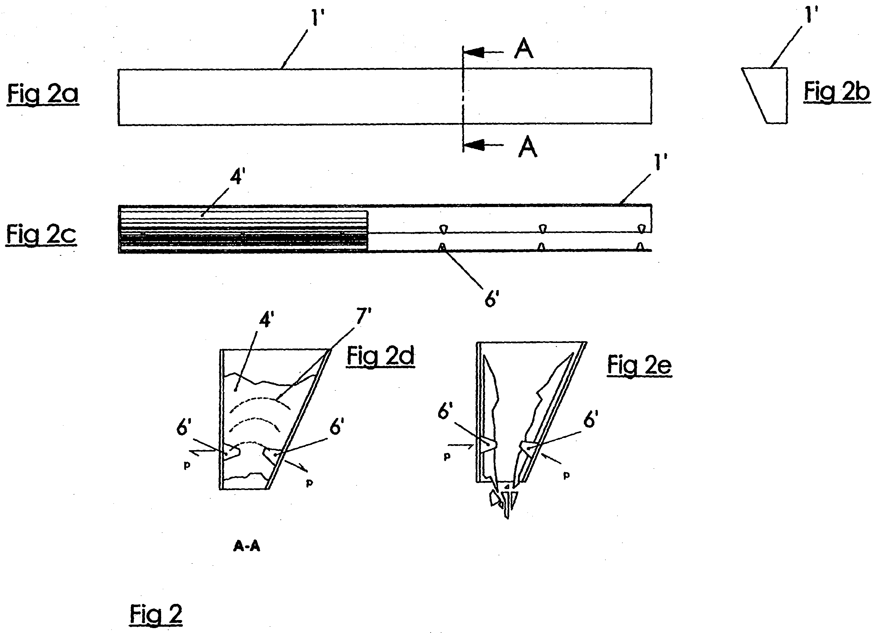

Eine solche Ausführungsform ist in der Figur 2 dargestellt. Figur 2a) zeigt eine Seitenansicht eines solchen Behälters 1', 2b) einen Schnitt entlang A-A, 2c) eine Draufsicht auf den Behälter 1' in teilweise mit Fluid 4' gefüllten und ungefüllten Zustand, 2d) entspricht der Figur 2b), allerdings ist die Darstellung etwas exakter und der Behälter 1' befindet sich in einem beladenen geschlossenen Zustand. Figur 2e) ist eine der Figur 2d) entsprechende Darstellung, allerdings befindet sich hier der Behälter 1' in einem geöffneten Zustand.

Der Behälter 1' dabei hat an der Innenseite seiner Seitenwände Düsen 6', die in einem bestimmten Raster angeordnet sind. Jede Düse 6' wird über ein eigenes Ventil unabhängig von den anderen Düsen 6' angesteuert. Eine Steuereinheit taktet immer nur ein Ventil an. Damit hat eine sich frei geblasene Düse 6' im Medium keinen Einfluss auf die anderen Düsen 6' mehr. Es kann ein größerer Einschaltdruck erreicht werden, der eine Brücke 7' explosionsartig bricht und der Luftverbrauch wird eingeschränkt.

Gemäß des beschriebenen Ausführungsbeispieles werden mehrere Düsen 6' zur Zerstörung der Schüttgutbrücken 7' eingesetzt. So wurden gute Ergebnisse erzielt, wenn die Düsen 6' alternierend an die Druckluftversorgung geschaltet werden, so dass jede Düse 6' mit der gleichen Leistung das Schüttgut beaufschlagt.

Die Zerstörung der Fluidbrücken 7' im Behälter 1' kann durch ein schlagartiges oder explosionsartiges Einblasen von Luft über die einzelnen Düsen 6' erfolgen, wobei jede Düse 6' über ein eigenes Ventil einzeln gesteuert und nacheinander geschaltet wird. Die Düsen blasen daher unabhängig voneinander und daher hat eine frei geblasene Düse 6' auch keinen Einfluss mehr auf die anderen Düsen 6'.

Durch unterschiedliche Einschaltschemen der Düsen kann das pulverförmige Medium auch gezielt in eine bestimmte Bewegung versetzt werden. So kann durch serielles Ein- und Ausschalten unter Einhaltung bestimmter Ansteuerungszeiten eine Wellenbewegung Längs des Behälters erzielt werden, was das Ausflussverhalten besonders begünstigt.

Bei einer solchen Ausführungsform hat es sich als insbesondere vorteilhaft erwiesen, dass der Einblasmoment sehr kurz ist und daher das Pulver nicht austrocknet. Dies hat sich insbesondere bei einem Einsatz von mit Härter angereichertem Sand als vorteilhaft erwiesen, dessen physikalische Eigenschaften sich vor dem Auftragen nicht wesentlich verändern sollen.

Die Konstruktion spart aber nicht nur am Luftverbrauch, sondern ist auch nicht platzintensiv.

Gemäß einer besonders bevorzugten Ausführungsform der vorliegenden Erfindung beträgt die Taktung der Düsen nacheinander etwa 0,05 s.

Um ein Austrocknen der Pulver/Fluid-Mischungen 4, 4' zu vermeiden, kann die eingeblasene Luft auch befeuchtet werden.

Gemäß der vorliegenden Erfindung ist es nun möglich durch Schwerkraft und/oder Vibrationen ausgelösten Fluss von Fluiden 4, 4' zu schalten und zu steuern, wobei die Schaltung oder Steuerung über die gezielte Bildung und Zerstörung von Fluid- oder Schüttgutbrücken 7, 7' mittels Unter- und Überdruckbeaufschlagung des Schüttgutes 4, 4' erfolgt. Dabei wird zur Bildung einer Schüttgutbrücke 7, 7' ein Unterdruck derart in das Schüttgut 4, 4' eingebracht, dass durch den Strömungswiderstand im Schüttgut 4, 4' zwischen den Schüttgutpartikeln anziehende Kräfte entstehen, die zur Verfestigung des pulverförmigem Materials bzw. zur Brückenbildung führen.

Zur Lösung bereits erzeugter Brücken bzw. Vertestigungen 7, 7' wird dann ein Überdruck verwendet, der die Reibungskräfte zwischen den Partikeln soweit herabsetzt, bis die Brücke 7, 7' zerstört wird.

Unter bestimmten Voraussetzungen kann das Material auch gelockert werden, wenn der Unterdruck einfach abgeschaltet wird.

Es kann hierbei ein aus einem Behälter ausfließender Pulverstrom über durch Unterdruck erzeugte Schüttgutpolster in der Ausflussöffnung - bezogen auf die Durchflussmenge - eingestellt werden.

Die Behälter 1, 1' können durchaus zur Steigerung der Sicherheit des Verschlusses zusätzlich einen einfachen mechanischen Schieber unter der Anordnung aufweisen.

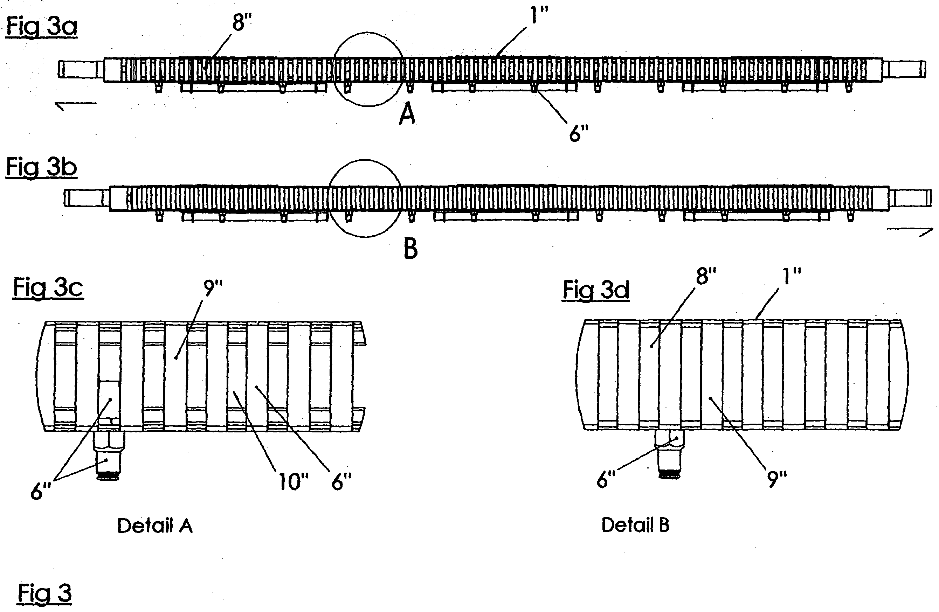

In der Figur 3 ist beispielsweise der Behälter1" in einer Ansicht von unten dargestellt, so dass ein möglicher zusätzlicher Verschlussmechanismus sichtbar ist. Fig. 3a und 3c zeigen den Behälter 1" jeweils in einem geöffneten und Fig. 3b und 3d in einem geschlossenen Zustand, wobei Fig. 3c und 3d die vergrößerten Ansichten der Bereiche A und B darstellen.

Wie der Figur 3 entnommen werden kann, ist die Öffnung des Behälters gemäß der gezeigten bevorzugten Ausführungsform mit einem Gitter 8" versehen, dass in einem geöffneten Zustand vorzugsweise über einen Schieber 9" verschlossen werden kann und ebenso so verschoben werden kann, dass Lücken 10" entstehen und im geöffneten Zustand Fluid ausfließen kann.

Die eingeblasene oder abgesaugte Luft kann auch dazu genutzt werden, um die Schüttguteigenschaften gemäß Feuchte und Temperatur gezielt einzustellen.

Weiterhin ist es auch möglich, dass mit der eingeblasenen Luft zusätzliche Reaktionskomponenten in das Schüttgut 4, 4' eingebracht werden.

In dem beschriebenen Ausführungsbeispiel wird bei einem Rapid Prototyping Verfahren mit einem Härter angemischter Sand mittels eines Recoaters oder Beschichters auf ein Baufeld aufgetragen. Der Recoater wird dabei nach jeder aufgetragenen Schicht von einer Beschichterbefüllung, wie sie in der Zeichnung gezeigt ist, auf ein gleiches Niveau befüllt. Die Recoaterbefüllung ist dabei vorzugsweise fest am Baufeldrand positioniert und der Recoater fährt zum Befüllen unter die Recoaterbefüllung. Zwischen dem Recoater und der Recoaterbefüllung besteht dabei nur ein minimaler Spalt.

Die Recoaterbefüllung besteht gemäß der gezeigten Ausführungsform im wesentlichen aus den drei Haupteilen: dem Verteilerrohr mit Förderschnecke, um den Vorratsbehälter gleichmäßig mit Sand zu befüllen und den Vorratsbehälter zu entlüften; dem Vorratsbehälter, der das Befüllvolumen aufnimmt und einer Verschlusseinheit, die den Vorratsbehälter verlustfrei abschließt und das Befüllvolumen des Recoaters gleichmäßig "abschneidet".

Die Befüllung öffnet auf der Unterseite einen Schieberverschluß 9" (siehe Figur 3). Dazu zieht ein Pneumatikzylinder ein dünnes, zur Versteifung gekantetes Blech mit Querschlitzen 10" auf und der Vorratsbehälter kann seinen Sand in den Recoater entleeren. Um Brücken im Sandvolumen zu brechen sind über dem Verschluss in einem Raster gesinterte Düsen 3, 6', 6" angeordnet, die von außen mit Druckluft beaufschlagt werden können. Gemäß der beschriebenen Ausführungsform wird dabei jede Düse 6', 6" über ein eigenes Ventil mit Luft versorgt. Nach Öffnen des Verschlusses wird nacheinander jede Düse 6', 6" einzeln im Millisekundenbereich geöffnet. Durch das explosionsartige Einblasen von Luft wird die Brücke zerstört. Es findet jedoch keine Fluidisierung statt. Hierbei kann überschüssige Luft über ein Entlüftungsrohr nach oben entweichen. Nach der Befüllung wird der Schieberverschluss vom gegenüberliegenden Pneumatikzylinder geschlossen. Der Verschlussschieber schneidet dabei die Sandverbindung zum Vorrat ab und sichert so ein gleichmäßiges Füllniveau über die gesamte Recoaterlänge. Hieran schließt sich das Befüllen des Vorratsbehälters durch Verteilerrohr und Förderschnecke an. Hierbei entstehen durch das Schieben der Schnecke die Brücken die später durch die Einblasvorrichtung aufgehoben werden.

## Patentansprüche

1. Vorrichtung umfassend einen Behälter zum Schalten eines Partikelmaterialstromes beim schichtweisen Bauen von Modellen, wobei aus dem Behälter (1, 1', 1"), der in Richtung einer Werkstückplattform eine Öffnung aufweist, Partikelmaterialien einem nachfolgendem Verfahrensschritt zugeführt werden, **dadurch gekennzeichnet, dass** in dem Behälter (1, 1', 1") an den Wänden Mittel zur Beaufschlagung des Partikelmaterials mit Unterdruck zur Bildung Partikelmaterialbrücken (7, 7') und mit Überdruck zur Lösung erzeugten Parikelmaterialbrücken (7, 7') vorhanden sind.

2. Vorrichtung nach Anspruch 1, **dadurch gekennzeichnet, dass** im oder am Behälter (1', 1") Düsen (6', 6") zum Zuführen von Gasen vorgesehen sind.

3. Vorrichtung nach einem der vorhergehenden Ansprüche 1 bis 2,
**dadurch gekennzeichnet, dass** die Düsen (6', 6") unabhängig voneinander ansteuerbar sind.

4. Vorrichtung nach einem der vorhergehenden Ansprüche 1 bis 3,
**dadurch gekennzeichnet, dass** zur Ansteuerung der Düsen (6', 6") Ventile vorgesehen sind.

5. Vorrichtung nach Anspruch 1, **dadurch gekennzeichnet, dass** im Behälter (1) poröse Materialien (2) angeordnet sind, deren Porenweite geringer als der kleinste Partikeldurchmesser ist.

6. Vorrichtung nach einem der vorhergehenden Ansprüche 1 bis 5,
**dadurch gekennzeichnet, dass** Öffnungen des Behälters (1, 1', 1") zusätzlich durch der Öffnung entsprechende Siebanordnungen verschießbar sind.

7. Vorrichtung nach Anspruch 6, **dadurch gekennzeichnet, dass** zum Verschließen der im Behälter (1, 1', 1") vorgesehenen Öffnung ein mechanischer Schieber vorgesehen ist.

8. Verfahren zum Schalten eines Partikelmaterialstromes beim schichtweisen Bauen von Modellen, wobei aus einem Behälter (1, 1', 1 "), der in Richtung einer Werkstückplattform eine Öffnung aufweist, Partikelmaterialien einem nachfolgendem Verfahrensschritt zugeführt werden, **dadurch gekennzeichnet, dass** die Partikel in einem Behälter (1, 1', 1") über die Wände des Behälters (1, 1', 1") mit unterdruck zur Bildung Partikelmaterialbrücken (7, 7') und mit Überdruck zur Lösung erzeugten Partikelmaterialbrücken (7,7') beaufschlagt werden.

9. Verfahren nach Anspruch 8, **dadurch gekennzeichnet, dass** die Unterdruckbeaufschlagung im Partikelmaterial zu einem Ausflusstopp des Partikelmaterial aus der Öffnung des Behälters (1, 1', 1") und die Überdruckbeaufschlagung zu einem Ausfließen des Partikelmaterials aus der Öffnung des Behälters (1, 1', 1") führt.

10. Verfahren nach Anspruch 8 oder 9, **dadurch gekennzeichnet, dass** das Partikelmaterial durch den Unterdruck lokal verfestigt wird.

11. Verfahren nach einem der vorhergehenden Ansprüche 8 bis 10, **dadurch gekennzeichnet, dass** die Beaufschlagung mit Unter- oder Überdruck mittels am oder im Behälter vorgesehener poröser Materialien (2) erfolgt, deren Porenweite geringer als ein kleinster Durchmesser des Partikelmaterials ist und durch diese porösen Materialien (2) Gase zu- und abgeführt werden.

12. Verfahren nach einem der vorhergehenden Ansprüche 8 bis 10, **dadurch gekennzeichnet, dass** im oder am Behälter (1', 1") Düsen (6', 6") zum Zuführen von Gasen vorgesehen sind und die Düsen (6', 6") über unabhängige Ventile einzeln ansteuerbar sind.

13. Verfahren nach Anspruch 12,
**dadurch gekennzeichnet, dass** die Einzelansteuerung der Düsen (6', 6") bei frei werden einer Düse (6', 6"), das Abfallen des Drucks an den anderen Düsen (6', 6") verhindert.

14. Verfahren nach einem der vorhergehenden Ansprüche 8 bis 13, **dadurch gekennzeichnet, dass** zum Erzeugen des Überdrucks Gase in das Partikelmaterial eingebracht werden.

## Claims

1. A device comprising a container for switching a particulate material flow in the layered construction of models, wherein particulate materials are supplied from the container (1, 1', 1") to a subsequent process step, said container (1, 1', 1") having an opening directed towards a workpiece platform, **characterised in that** means are provided inside the container (1, 1', 1 "), on the walls thereof, for appyling a negative pressure onto the particulate material so as to form particulate material bridges (7, 7') and for applying a positive pressure so as to dissolve the particulate material bridges (7, 7') generated.

2. The device according to claim 1, **characterised in that** nozzles (6', 6") for supplying gases are provided in or on the container (1', 1 ").

3. The device according to any one of the preceding claims 1 to 2, **characterised in that** the nozzles (6', 6") are independently controllable.

4. The device according to any one of the preceding claims 1 to 3, **characterised in that** valves are provided to control the nozzles (6', 6").

5. The device according to claim 1, **characterised in that** there are provided, in the container (1), porous materials (2) whose pore width is smaller than the smallest particle diameter.

6. The device according to any one of the preceding claims 1 to 5, **characterised in that** openings of the container (1, 1', 1") can be closed additionally by screen assemblies corresponding to the opening.

7. The device according to claim 6, **characterised in that** a mechanical pusher is provided for closing the opening provided in the container (1, 1', 1").

8. A method for switching a particulate material flow in the layered construction of models, wherein particulate materials are supplied from a container (1, 1', 1") to a subsequent process step, said container (1, 1', 1") having an opening directed towards a workpiece platform, **characterised in that** the particles inside a container (1, 1', 1") are subjected, via the walls of the container (1, 1', 1"), to a negative pressure so as to form particulate material bridges (7, 7') and to a positive pressure so as to dissolve the particulate material bridges (7, 7') generated.

9. The method according to claim 8, **characterised in that** the application of negative pressure causes the particulate material to stop flowing out of the opening of the container (1, 1', 1 ") and the application of positive pressure causes the particulate material to flow out of the opening of the container (1, 1', 1").

10. The method according to claim 8 or 9, **characterised in that** the particulate material is locally solidified by the negative pressure.

11. The method according to any one of the preceding claims 8 to 10, **characterised in that** the application of negative or positive pressure is effected by means of porous materials (2) provided on or in the container, wherein the pore width of said materials is smaller than a smallest diameter of the particulate material and gases are supplied and removed through said porous materials (2).

12. The method according to any one of the preceding claims 8 to 10 , **characterised in that** nozzles (6', 6") for supplying gases are provided in or on the container (1, 1 ") and said nozzles (6', 6") are individually controllable via independent valves.

13. The method according to claim 12, **characterised in that** the individual control of the nozzles (6', 6") prevents a drop in pressure at the other nozzles (6', 6") as soon as a nozzle (6', 6") becomes available.

14. The method according to any one of the preceding claims 8 to 13, **characterised in that** the positive pressure is generated by introducing gases into the particulate material.

## Revendications

1. Dispositif comportant un réservoir pour commuter un courant de matière particulaire lors de la construction couche par couche de maquettes, dans lequel des matières particulaires sont alimentées à une étape successive d'un procédé à partir dudit réservoir (1, 1', 1") qui présente un orifice dirigé vers une plateforme pour pièces, ledit dispositif étant **caractérisé en ce que** l'on prévoit à l'intérieur dudit réservoir (1, 1', 1"), sur les parois de celui-ci, des moyens pour soumettre la matière particulaire à une dépression afin de constituer des ponts en matière particulaire (7, 7') et à une surpression afin de dissoudre les ponts en matière particulaire (7, 7') ainsi constitués.

2. Dispositif selon la revendication 1, **caractérisé en ce que** l'on prévoit dans ou sur ledit réservoir (1', 1") des buses (6', 6") pour l'alimentation de gaz.

3. Dispositif selon l'une quelconque des revendications précédentes 1 à 2, **caractérisé en ce que** les buses (6', 6") peuvent être commandées de manière indépendante.

4. Dispositif selon l'une quelconque des revendications précédentes 1 à 3, **caractérisé en ce que** l'on prévoit des vannes pour commander les buses (6', 6").

5. Dispositif selon la revendication 1, **caractérisé en ce que** l'on prévoit dans ledit réservoir (1) des matières poreuses (2) dont la taille de pore est inférieure au diamètre de particule le plus petit.

6. Dispositif selon l'une quelconque des revendications précédentes 1 à 5, **caractérisé en ce que** des orifices du réservoir (1, 1', 1") peuvent être fermés en plus par des ensembles de tamis correspondant à l'orifice.

7. Dispositif selon la revendication 6, **caractérisé en ce que** l'on prévoit un tiroir mécanique pour fermer l'orifice prévu dans ledit réservoir (1, 1', 1").

8. Procédé de commutation d'un courant de matière particulaire lors de la construction couche par couche de maquettes, où des matières particulaires sont alimentées à une étape successive dudit procédé, à partir d'un réservoir (1, 1', 1") qui présente un orifice dirigé vers une plateforme pour pièces, ledit procédé étant **caractérisé en ce que** les particules sont soumises, à l'intérieur d'un réservoir (1, 1', 1") et au moyen des parois dudit réservoir (1, 1', 1 "), à une dépression afin de constituer des ponts en matière particulaire (7, 7') et à une surpression afin de dissoudre les ponts en matière particulaire (7, 7') ainsi constitués.

9. Procédé selon la revendication 8, **caractérisé en ce qu'**en soumettant la matière particulaire à une dépression on arrête sa sortie de l'orifice du réservoir (1, 1', 1") et en soumettant la matière particulaire à une surpression on fait sortir celle-ci de l'orifice du réservoir (1, 1', 1").

10. Procédé selon la revendication 8 ou 9, **caractérisé en ce que** la matière particulaire est solidifiée localement par la dépression.

11. Procédé selon l'une quelconque des revendications précédentes 8 à 10, **caractérisé en ce que** l'on réalise la dépression ou la surpression au moyen de matières poreuses (2) prévues sur ou dans le réservoir, la taille de pore desdites matières étant inférieure à un diamètre le plus petit de ladite matière particulaire et des gaz étant alimentés et enlevés à travers lesdites matières poreuses (2).

12. Procédé selon l'une quelconque des revendications précédentes 8 à 10, **caractérisé en ce que** l'on prévoit dans ou sur ledit réservoir (1', 1") des buses (6', 6") pour l'alimentation de gaz et **en ce que** les buses (6', 6") peuvent êtres commandées individuellement par des vannes indépendantes.

13. Procédé selon la revendication 12, **caractérisé en ce que** la commande individuelle des buses (6', 6") empêche une baisse de pression des autres buses (6', 6") lorsqu'une buse (6', 6") devient disponible.

14. Procédé selon l'une quelconque des revendications précédentes 8 à 13, **caractérisé en ce que** l'on introduit des gaz dans la matière particulaire afin de générer ladite surpression.
